# EUROPEAN PATENT SPECIFICATION

(11) **EP 3 005 919 B1**
(45) Date of publication and mention of the grant of the patent: **21.11.2018**
(21) Application number: 14187815.7
(22) Date of filing: 06.10.2014
(51) Int. Cl.: A47K 3/30

(54) **A FIXATION DEVICE FOR A SHOWER DOOR SYSTEM**
FIXIERVORRICHTUNG FÜR EIN DUSCHTÜRSYSTEM
DISPOSITIF DE FIXATION POUR UN SYSTÈME DE PORTE DE DOUCHE

(43) Date of publication of application: 13.04.2016
(60) Divisional application: 18194082.6
(73) Proprietor: Geberit International AG, 8645 Jona (CH)
(72) Inventor: Mattsson, Martin, 375 34 Mörrum (SE); Nilsson, Patrik, 375 31 Mörrum (SE); Randle, Ian, Shrewsbury, Shropshire SY2 5LD (GB)
(74) Representative: Ström & Gulliksson AB

(56) References cited:
- FR-A5- 2 075 296
- US-A- 3 553 891
- US-A- 4 990 044
- US-A- 5 205 102

## Description

### Technical Field

The present invention related to a fixation device for a shower door system, for example a shower door profile, or a shower panel profile. More particularly, the present invention relates to a fixation device allowing for a two-step fixation such that the shower door or panel may be mounted in a facilitated manner.

### Background

Shower panels, such as fixed panels or doors are normally desired in bathrooms or in other areas where slim panels or door leafs are used to limit the amount of water escaping out from the shower area. Although shower doors are subject to similar requirements as ordinary doors, such as opening and closing by pivoting around a vertical axis, they tend to differ in their attachment to the surrounding structure. While ordinary doors are hinged at a frame structure surrounding an opening in the wall, shower doors are normally attached to the wall by means of a vertical wall profile secured to the wall. Hence, the shower door may extend out from the wall thus delimiting the shower area.

The wall profile is normally a vertically extending profile being rigidly secured to the wall by means of screws or similar. The shower door thus includes a door leaf being secured to a hinge, whereby the hinge of the shower door is mounted to the wall profile. In the case of fixed panels the same mounting process is normally required, i.e. screwing the panel to the wall profile.

Mounting of the hinge to the wall profile is traditionally made by screwing the hinge to the wall profile. For this, it is required to align the shower door relative the wall profile, and subsequently tighten the screws for securing the position of the shower door. As shower doors normally are rather large, it is not possible to keep the shower door aligned while at the same time tightening the screws. Therefore prior art solutions require at least two persons for ensuring a desired mounting of the shower door to the wall profile.

A prior art fixation device is disclosed in patent US 5,205,102, describing a corner fastener used for securing a first frame member to a second frame member. The corner fastener includes a body sized to be inserted in a cavity of the first frame member, locking tabs have first ends operatively connected to the body and second ends free to move between an unengaged position and an engaged position.

Another prior art fixation device is disclosed in the French patent FR 2.075.296 describing a split nut comprising two halves connected together by resilient means so that they are movable towards and away from each other diametrically of the nut bore to allow the nut to be passed between the lips of a housing slot and then expand to grip the side walls of the slot.

In addition document US 3,553,891 discloses a fixation device for a shower door system, comprising a frame with an aperture, two moveable structures and a threaded bore for receiving a bolt. In view of the above, there is a need for a fixation device which allows a single person to mount a shower panel, such as a shower door or a fixed panel, to a wall profile in a fast and reliable manner.

### Summary

Accordingly, the present invention preferably seeks to mitigate or eliminate one or more of the above-identified deficiencies in the art singly or in any combination and solves at least the above mentioned problems by providing a fixation device for a shower door system, that comprises at least the features of claim 1 and wherein the fixation device allows for a quick pre-fixation, as well as a rigid and robust fixation of the shower door relative the shower door profile.

An idea of the present invention is to provide a fixation device which is attached to the shower door profile, wherein a quick pre-fixation is achieved by positioning the shower door such that parts of the shower door engages with the fixation device. A secure fixation is thereafter achieved by tightening the position of the shower door relative the shower door profile.

According to a first aspect, a fixation device for a shower door system is provided. The fixation device comprises a frame and at least two moveable structures being arranged within said frame, wherein the interface between the at least two moveable structures forms a threaded bore for receiving a bolt.

The diameter of the bore is determined by the position of the at least two moveable structures. Hence, an associated bolt is easily inserted into the bore when the diameter of the bore is enlarged, whereby a decrease in diameter causes engagement between the bore and the bolt.

The frame comprises an aperture being aligned with the threaded bore. This facilitates insertion of the bolt into the bore. The at least two moveable structures are moveable in a first direction towards and away from said aperture of said frame, as well as in a second direction towards and away from each other for increasing and decreasing the diameter of the threaded bore. Preferably the at least two moveable structures are guided by said frame such that moving the at least two moveable structures towards the aperture of the frame will cause a simultaneous movement towards each other.

The fixation device may further comprise at least one leg connecting a moveable structure with said frame. The angle of the leg relative the frame will thus define the position of the moveable member.

The frame may comprise at least one tilted surface, and the moveable structure may comprise a corresponding tilted surface. Hence, the moveable structure will move along the tilted surfaces such that the diameter of the bore will change as the moveable structure moves towards and away from the wall.

The fixation device may further comprise means for locking the position of at least one of said moveable structures. In this way the diameter of the bore, and hence the engagement of the bolt to the fixation device, will be secured in a robust and safe manner.

The locking means may for this purpose comprise a groove in said moveable structure, as well as a wing being hingedly attached to the inner side of said frame, such that a free end of said wing may snap into said groove. The wing may be detachable from said frame for allowing reuse of the fixation device. Hence, the wing may either be formed integrally with the frame, or inserted into corresponding grooves, or tracks, of the frame.

The frame may comprise locking means for securing the position of the moveable structures. For example, the locking means may form an aperture for receiving a front end of the moveable structures.

According to a second aspect not forming part of the invention, a fixation device for a shower door system is provided. The fixation device comprises a frame and a sleeve for insertion into said frame, wherein the sleeve comprises a threaded bore for receiving a bolt, and wherein the frame comprises a slot for fixating the position of the sleeve relative the frame.

According to a third aspect not forming part of the invention, a fixation device for a shower door system is provided. The fixation device comprises a sleeve for insertion into a space within a wall profile. The sleeve is formed by two halves being connected to each other by means of a folding line extending along the axial extension of the sleeve, such that the sleeve may be opened and closed. Each one of the two sleeve halves comprises a threaded recess, whereby the sleeve, in a closed state, forms a threaded bore for receiving a bolt. Further to this, the sleeve comprises means for fixating the sleeve relative the wall profile for fixating the axial position of the sleeve relative the frame.

According to a fourth aspect not forming part of the invention, a fixation device for a shower panel system is provided. The shower panel system is configured to form a pivotable door, or a fixed panel. The fixation device comprises a support structure for attachment to a wall profile, and an engagement device for attachment to a shower door or panel, wherein the engagement device comprises means for snap-locking said engagement device to said support structure. In a preferred embodiment, the fixation device further comprises means for securing said engagement device to said support structure.

In some unclaimed embodiments, the means for snap-locking comprises a double ball spring.

According to a fifth aspect not forming part of the invention, a fixation device for a shower door system is provided. The fixation device comprises a frame and a sleeve being inserted into said frame. A central portion of the sleeve forms a threaded bore for receiving a bolt, and the lateral ends of the sleeve comprises one or more protrusions extending outwards, i.e. away from the central portion. The frame has one or more corresponding recesses provided at its inner surface, such that the protrusion(s) of the sleeve may engage with the recess(es) of the frame. When the sleeve is displaced relative the frame the protrusion(s) will press the frame outwards, such that the lateral dimensions of the frame increases. Upon this change in shape of the frame, the frame will be clamped against the wall profile.

According to a sixth aspect, a shower door system is provided. The shower door system comprises a wall profile, and a shower door having a door leaf, a hinge and a hinge support, wherein said shower door system further comprises at least one fixation device according to the first aspect described above.

### Brief Description of Drawings

Further objects, features and advantages will appear from the following detailed description, with reference being made to the accompanying drawings, in which:
Fig. 1 is a side view of a shower door system according to an embodiment;
Fig. 2 is an exploded view of a shower door system comprising a fixation device according to an embodiment;
Figs. 3a-c are top views of the fixation device shown in Fig. 2 during mounting of the shower door;
Figs. 4a-b show the fixation device of Figs. 2 and 3 in more detail;
Figs. 5a-c are top views of a fixation device according a further embodiment;
Figs. 6a-b show a fixation device according to another embodiment;
Figs 6c-d show a further unclaimed embodiment of a shower door system;
Figs. 7a-e show a fixation device according to another embodiment not forming part of the invention;
Figs. 7f-j show a fixation device according to a further embodiment not forming part of the invention;
Figs. 8a-d show a fixation device according to another embodiment;
Fig. 9 shows a fixation device according to a further embodiment not forming part of the invention; and
Figs. 10a-d show a fixation device according to a yet further embodiment not forming part of the invention.

### Detailed Description

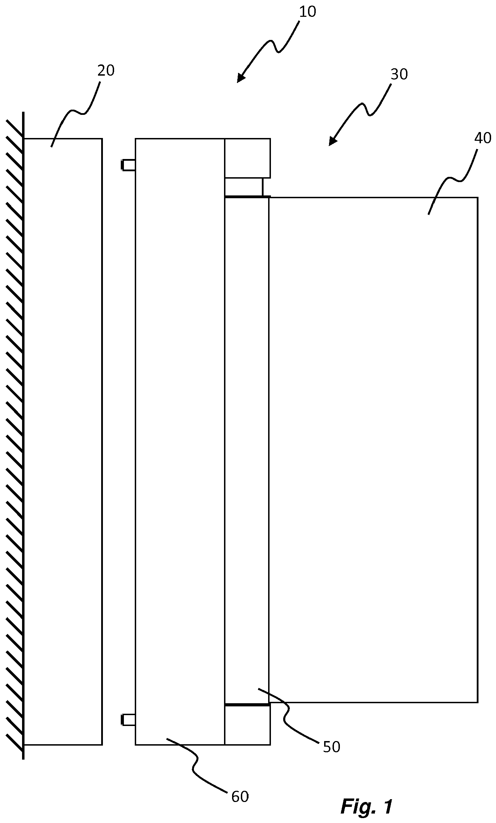

Starting with Fig. 1, a shower door system 10 is shown. The shower door system 10 comprises a shower door profile 20, being securely attached to the wall e.g. by means of screws or similar, as well as a shower door 30. The shower door 30 comprises three major parts; a door leaf 40, preferably being made of a thin body such as glass, plastic, or similar, a hinge 50 to which the door leaf 40 is securely attached, and a hinge support 60. The hinge 50, forming a vertically extending structure, allows the door leaf 40 to pivot around a vertical axis relative the hinge support 60. As is readily understood, the shower wall system 10 is provided by pre-mounting the shower door 30, and fixating the shower door 30 to the shower door profile 20 by securing the hinge support 60 to the shower door profile 20.

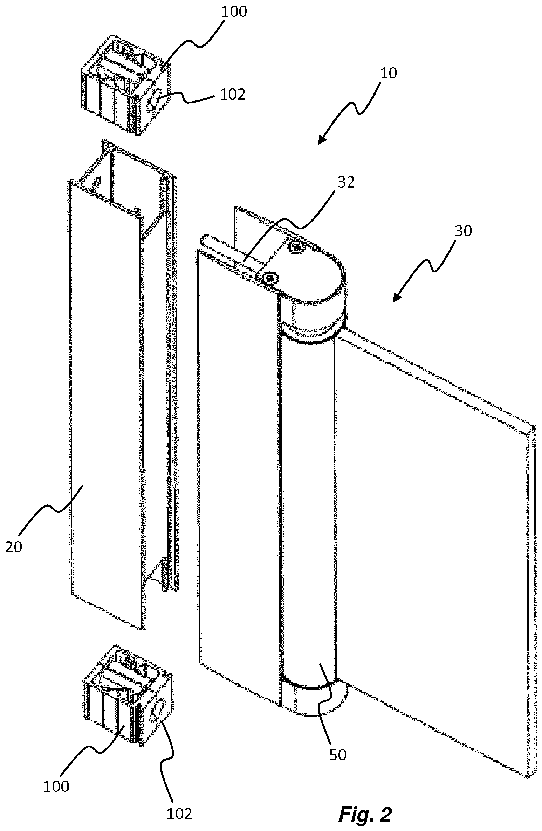

Now turning to Fig. 2, the shower door system 10 is shown in further detail. Fixation of the shower door 30 to the shower door profile 20 is achieved by means of at least one fixation device 100. In the embodiment shown, two fixation devices 100 are provided at the longitudinal ends of the shower door profile 20; however the exact number of fixation devices 100 may vary depending on the size and construction of the shower door profile 20 and/or the shower door 30.

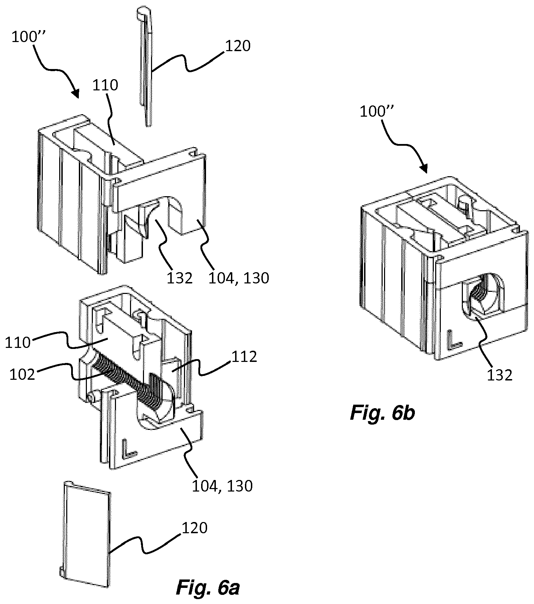

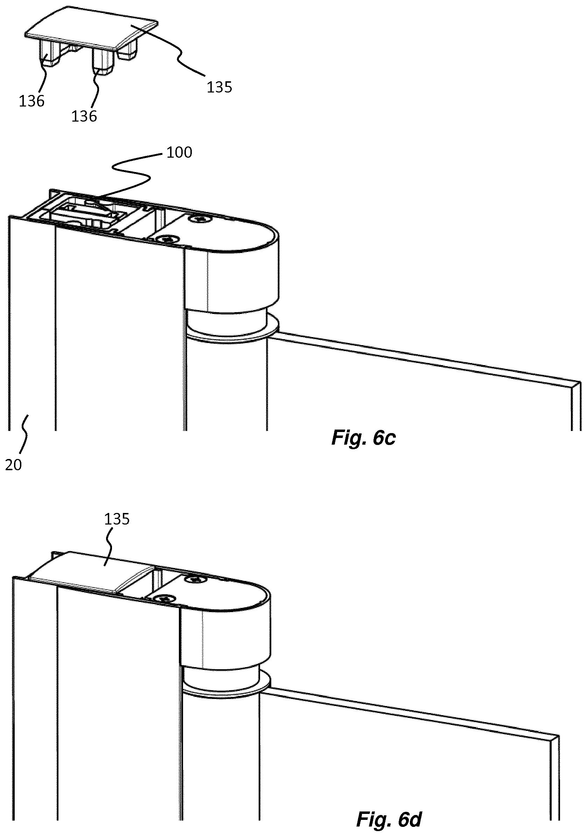

The fixation devices 100 are attached to the shower door profile 20 by inserting them into associated volumes inside the profile 20. In one embodiment the longitudinal ends of the profile 20 are open so that the fixation devices 100 can be inserted. Ridges or similar structures may be provided inside the hollow profile 20 such that the fixation devices 100 will be prevented from moving further into the profile 20. Preferably, the fixation devices 100 may only be inserted in a specific orientation. Lids may further be provided for covering the ends of the profile 20 once the fixation devices 100 have been inserted. This will be further described with reference to Fig. 6c and Fig. 6d.

Each fixation device 100 has a recess, or bore 102 for receiving a bolt 32 of the shower door 30. The bolt 32 is preferably extending through the hinge 50 such that it may be operated from a side of the hinge 50 being opposite the side facing the shower door profile 20. The axial position of the bolts 32 should however be fixed relative the hinge 50, such that the bolts 32 are prevented from moving further towards the shower door profile 20.

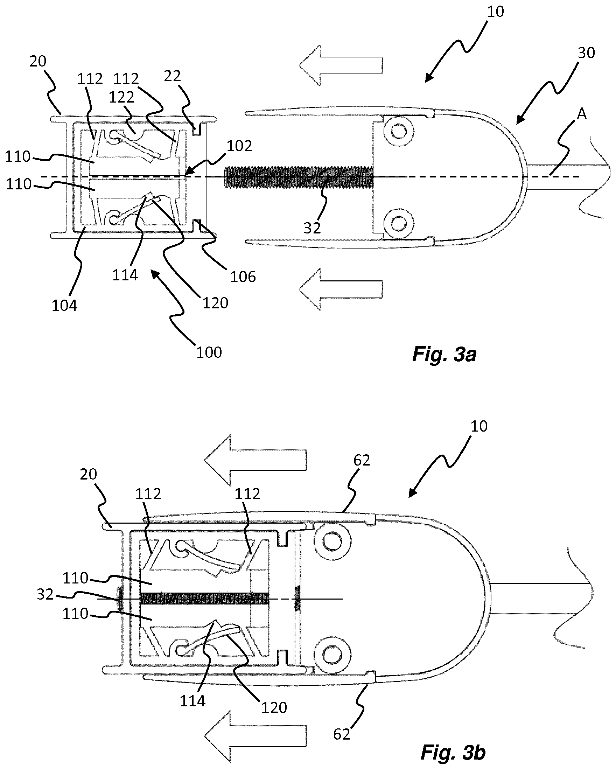

With reference to Figs. 3a-c mounting of the shower door 30 is shown. As can be seen the fixation device 100 has a rectangular body 104 which is arranged in close proximity with the interior walls of the profile 20. The rectangular body 104 may be provided with a recess 106 that engages with a corresponding protrusion 22 of the profile 20. With such configuration the relative position between the fixation device 100 and the profile 20 is fixed. Two moveable structures 110 are provided inside the rectangular body 104, being symmetrically arranged on each sides of a horizontal central axis A of the fixation device 100.

Each moveable structure 110 is attached to one inner side of the rectangular body 104 by means of one or more legs 112. In an idle position the legs 112 are slightly angled relative the normal of the inner side of the rectangular body 104 such that the moveable structure 110, the two legs 112, and the inner side of the rectangular body 104 has the shape of a rhomb. Further, each moveable structure has a curved recess facing towards the opposite moveable structure 110. Each curved recess has interior threads, such that two adjacent moveable structures 110 form a threaded bore for receiving the bolt 32.

The opposite side of each moveable structure 110, i.e. the side facing the inner wall of the rectangular body 104 to which the legs 112 are attached, is provided with a groove 114. The groove 114 is configured to engage with the free end of a wing, or tab 120 hingedly attached to the inner side of the rectangular body 104, i.e. at a position being arranged between the positions where the legs 112 connects with the inner side of the rectangular body 104. The wing 120 is preferably resilient, such that it strives to return to its idle position once it has been forced to move away from such position. A protrusion 122, arranged at the inner side of the rectangular body 104, may prevent the wing 120 from deflecting too much.

Fig. 3a shows the fixation device prior to mounting of the shower door 30. In this idle position the curved recesses of the two moveable structures 110 are forming a bore 102 having a diameter being slightly less than the diameter of the bolt 32. When the shower door 30 is to be mounted, the bolts 32 of the shower door 30 are simply aligned with the position of the bores 102 and the shower door 30 is pushed towards the profile 20. Upon this, as is shown in Fig. 3b, the moveable structures 110 will be allowed to move in the direction of the pushing force. The tilting angle of the legs 112 will thus increase, thus also increasing the distance between the moveable structures 110. Consequently, the free end of each wing 120 will be positioned at an increased distance from the groove 114. The bolt 32 will upon this be allowed to be inserted into the bore 102.

As can be further seen in Fig. 3b the hinge support 60 has two spaced apart side walls 62, wherein the distance between the side walls 62 is approximately equal to, or slightly bigger, than the width of the profile 20. Hence, the bolt 32 is correctly guided while being inserted into the bore 102.

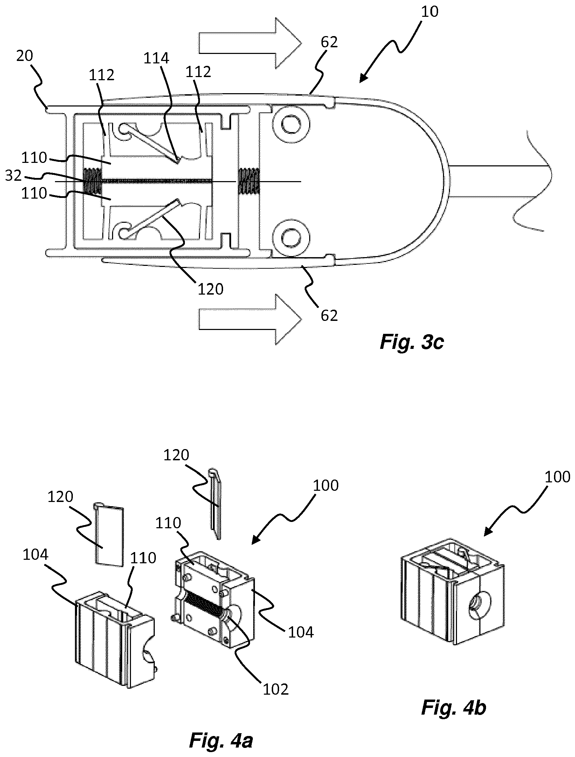

A quick pre-fixation of the shower door is thereafter achieved by applying a pulling force on the shower door 30, as is shown in Fig. 3c. Upon this the engagement between the bolt 32 and the bore 102, by means of the corresponding threads, will force the moveable structures 110 to move in the direction of the pulling force, i.e. away from the wall. Hence the distance between the groove 114 and the free end of each wing 120 will decrease until the free ends snap into the groove, thus locking the position of the shower door 30 relative the profile 20. Once the wings 120 snap into the respective grove 114 the moveable structures 110 will be prevented from moving relative the rectangular body 104.

It should be noted that the locking functionality is provided as a precautionary measure for avoiding malfunction of the fixation device. Hence, in some embodiments the fixation device 100 does not have the locking means, i.e. the wing 120 and the corresponding groove 114.

If two fixation devices 100 are used to secure the position of the shower door 30, some misalignment may be due after pre-fixation. For example, the lower bolt may be inserted to a slightly more extent than the upper bolt thus leading to a non-vertical shower door 30. However, the bolt is provided with an accessible structure, such as a recess at the bolt head, for operating the bolt by means of a tool. A correct alignment of the shower door 30 is thus easily performed by tightening, or loosening, one or more of the bolts 32. Since the position of each bore 102 is now fixed, such operation on the bolts 32 will adjust the position of the shower door 30.

Figs. 4a-b show an embodiment of the fixation device 100. From Fig. 4a the fixation device is formed by two separate parts. The two parts are connectable to form the rectangular body 104, e.g. by means of an interface including pins and recesses. As can be seen in Fig. 4a the pins and recesses are provided not only at the rectangular body 104 per se, but also at each moveable structure 110 such that the moveable structures 110 will move together although allowing for a relative displacement of the moveable structures 110 in a direction perpendicular to the longitudinal axis A as is shown in Fig. 3a. The wings 120 are provided as separate parts which may be dismounted from the fixation device 100 by lifting them up from their associated groove in the rectangular body 104. This is advantageous in that the fixation device 100 may be used several times, since removing the wings 120 will allow the moveable structures 110 to return to their idle position. In an alternative embodiment, the wings 120 are formed integrally with the frame 104. The ready-to-use fixation device 100 is shown in Fig. 4b.

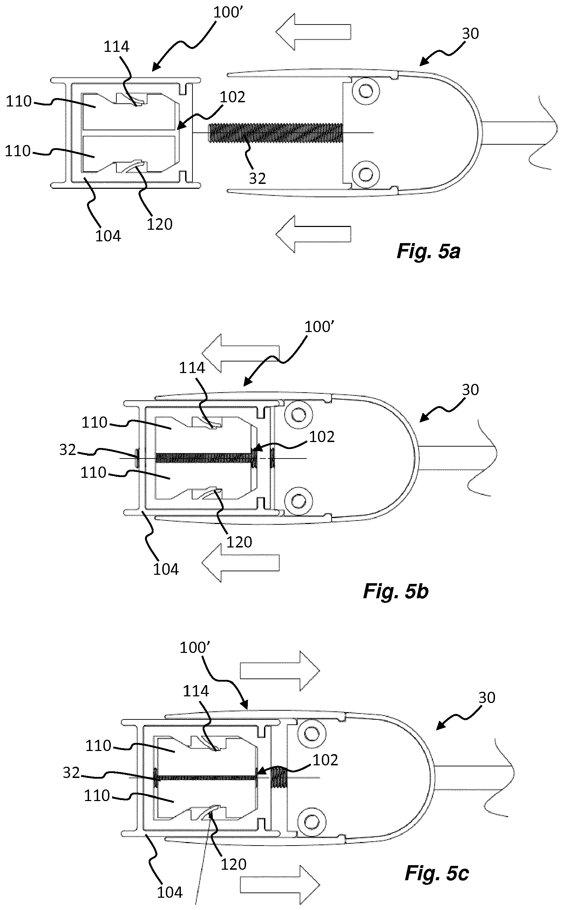

Now turning to Figs. 5a-c a fixation device 100' according to another embodiment is shown. The fixation device 100' is similar to the fixation device 100 previously described with reference to Figs. 4a-c, i.e. it comprises a rectangular body 104, or frame, having two wings 120 for engagement with corresponding grooves 114 of moveable structures 110.

The moveable structures 110 are arranged adjacent to each other such that a circular recess at each moveable structure 110 together forms a threaded bore 102 for receiving the bolt 32 of the shower door 30. However, the moveable structures 110 are not connected to the frame 104 by means of legs, but instead the position of each moveable structure 110 is determined by tilted surfaces on the rectangular body 104, as well as on the moveable structures 110. As is shown in the figures the rectangular body 104 has two sets of tilted surfaces, each set being arranged on opposite inner sides of the rectangular body 104 and each surface being tilted inwards. When the moveable structures 110 move towards and away from the wall, i.e. during pre-fixation, they will also move inwards or outwards relative the center of the rectangular body 104 due to the provision of the tilted surfaces.

In Fig. 5a the fixation device 100 is in an idle position, where the distance between the moveable structures 110 forms a bore 102 having a diameter being slightly less than the diameter of the bolt 32. The free end of the wing 120 does not engage with groove 114 of the moveable structure 110. When the shower door 30 is pushed towards the profile 20, such that the bolt 32 pushes against the bore 102, the moveable structures 110 will move in the direction of the pushing force thus increasing the diameter of the threaded bore 102. Hence, the bolt 32 may be fully inserted into the bore 102 as is shown in Fig. 5b. For pre-fixation the shower door 30 is pulled away from the profile 20, whereby the engagement between the bore 102 and the bolt 32 will urge the moveable structures 110 to move in the direction of the pulling force. The free end of each wing 120 will thus snap into the associated groove 114 for locking the position of the moveable structures 110. This is shown in Fig. 5c.

Now turning to Figs. 6a-b another embodiment of a fixation device 100" is shown. The fixation device 100" is similar to the fixation device 100 described with reference to Figs. 4a-c and Figs. 3a-c, however the front side of the rectangular body 104 is forming a locking means 130. The locking means 130 has the shape of a plate with a through hole, or aperture 132 for receiving the bolt 32. The dimension of the aperture 132 is slightly larger than the dimensions of a front end of the two moveable structures 110. When the two moveable structures 110 are arranged adjacent to each other, as is the case when pre-fixation is done, the inlet of the bore 102 will be defined by the front ends of the two moveable structures 110. As the moveable structures 110 are pulled towards the shower door 30, i.e. away from the wall, the inlet end of the bore 102 will extend into the aperture 132 of the locking means 130 such that the moveable structures 110 are prevented from moving away from each other in a lateral direction. Hence, should the legs 112 be damaged during or after fixation, the fixation device 100" will still fixate the shower door 30 relative the profile 20 due to the provision of the locking means 130.

In Figs. 6c and 6d a further embodiment of a shower door system 10 is shown, which shower door system 10 comprises a shower door 30, a shower door profile 20, at least one fixation device 100, and a lid 135 not only providing a cover for the longitudinal end of the wall profile 20, but also a safety functionality for the fixation device 100. As already been explained above the position of the moveable structures 110 is critical after fixation. Should they be allowed to move away from each other, thus increasing the diameter of the bore 102, the shower door 30 would possibly fall out from the wall profile 20. Hence, the lid 135 is provided with vertically projecting structures 136, which projections 136 are designed to fill the space inside the fixation device 100, i.e. the space between the frame 104 and the moveable structures 110. Once the lid 135 is positioned, the moveable structures 110 will be prevented from moving inside the frame 104. It should be noted that a lid 135 as being described above may be suitable for all the embodiments of a fixation device described within this specification.

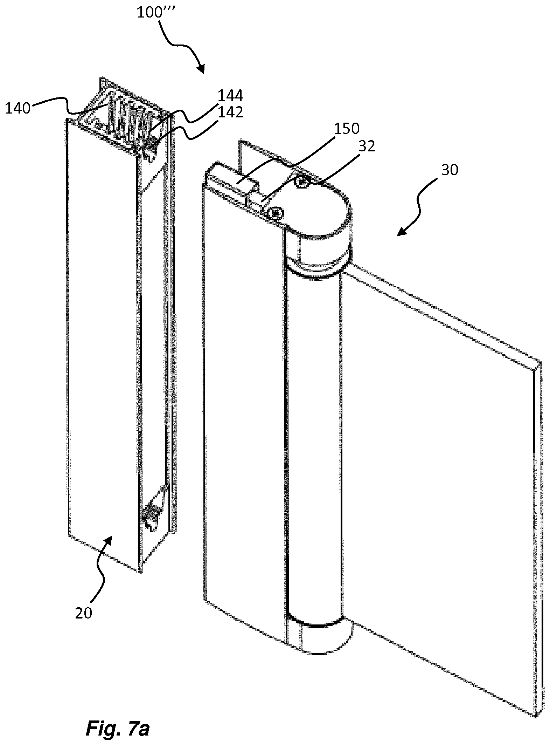

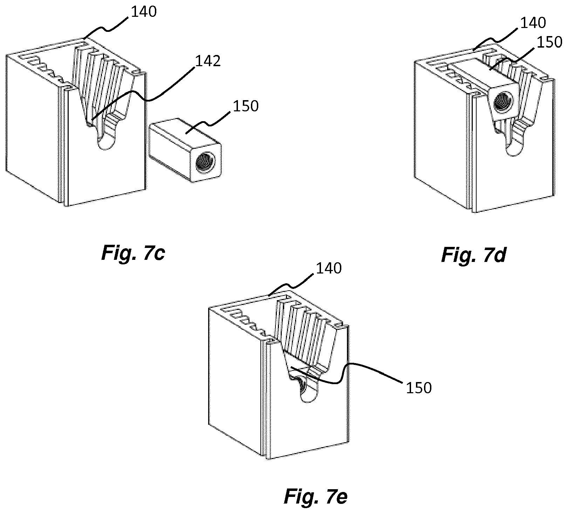

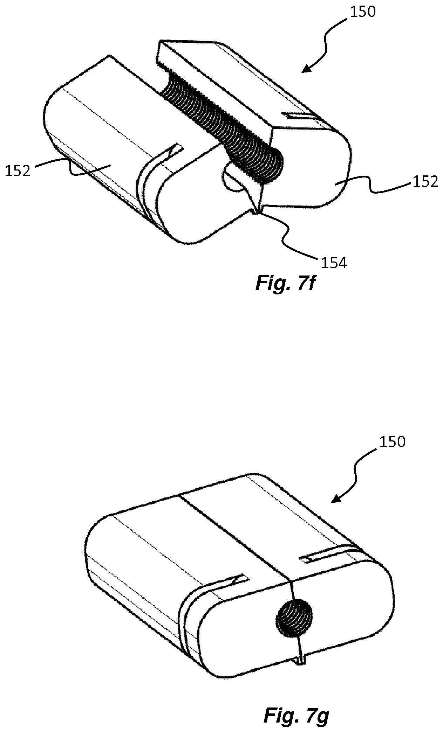

Figs. 7a-e shows a fixation device 100"' according to a yet further embodiment. Similar to the fixation devices previously described the fixation device 100'" allows for a simple pre-fixation, as well as a secure fixation of the shower door 30 relative the profile 20.

In Fig. 7a the fixation device 100'" is shown. The fixation device 100'" comprises two parts; a frame 140 being arranged at a fixed position in the profile 20, and a sleeve 150 for engagement with the frame 140. The sleeve 150 forms a threaded bore for engagement with the bolt 32 of the shower door 30, and has outer dimensions corresponding to the dimensions of a slot 142 of the frame 140. Along its vertical extension the frame 140 has an upper portion 144 into which the sleeve 150 may be easily insertable. The dimensions of the upper portion 144 are substantially larger than the dimensions of the sleeve 150. The upper portion 144 extends to a lower portion of the frame 140, at which the slot 142 is provided. Hence the frame 140 has an open end facing the bolt 32, whereby the width of the open end decreases along the vertical extension.

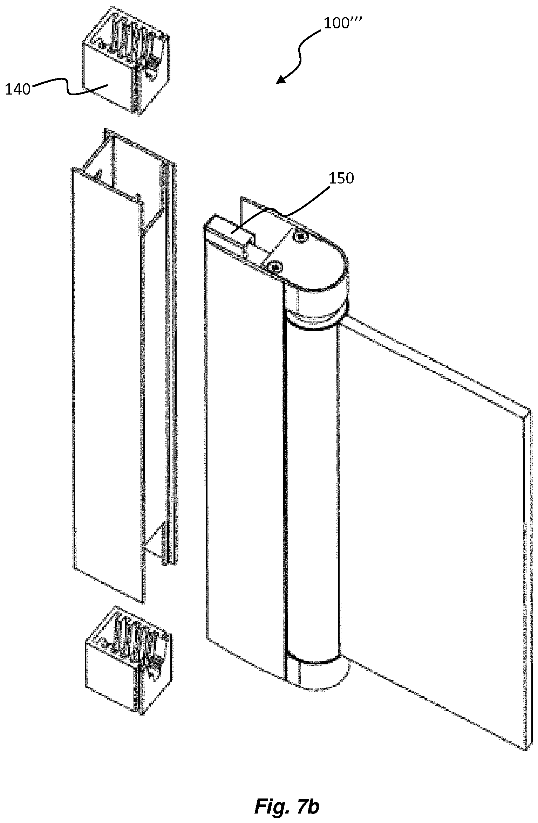

Operation of the fixation device 100"' is shown in Figs. 7b-d. In all these figures, it is assumed that the bolt 32 (not shown) is threaded into the sleeve 150. Further, the frame 140 is assumed to be securely positioned in the profile 20.

The sleeve 150 has a rectangular shape, and the slot 142 of the frame 140 has a corresponding shape. In a first step, shown in Fig. 7c, the sleeve 150 is aligned with the open end of the frame 140. Subsequently the sleeve 150, and hence the entire shower door 30 (not shown) is moved such that the sleeve 150 is inserted into the frame 140 at the upper portion 144. For pre-fixation the shower door 30, and hence the sleeve 150, is lowered whereby the sleeve 150 is positioned in the slot 142. For achieving a secure fixation, the bolt 32 of the shower door 30 may be tightened.

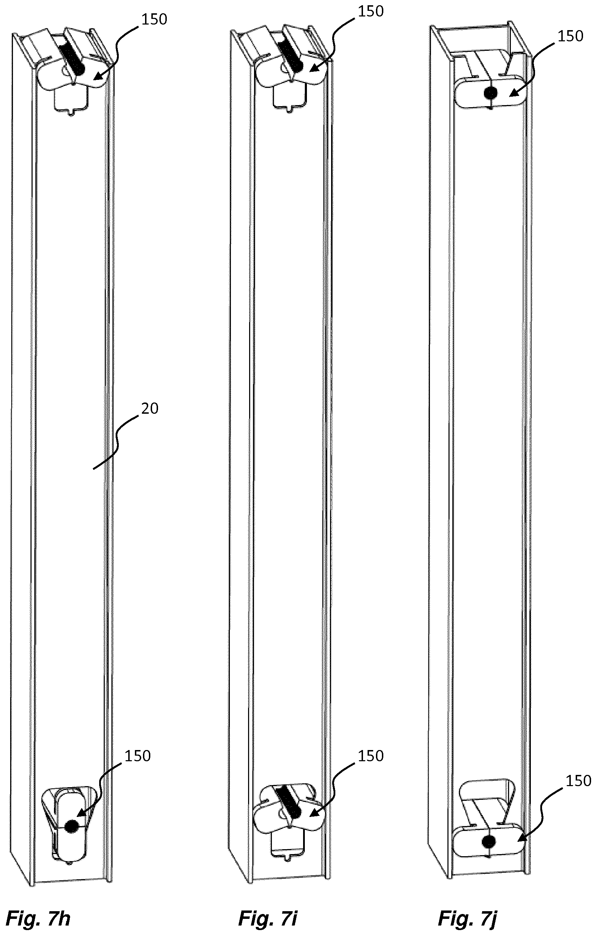

In Figs. 7f-j a further embodiment of the fixation device 100'" is shown. Here, the sleeve 150 is constructed as two symmetrical parts 152 being connected by means of a pivot axis 154 extending along the two parts 152. Each one of the two parts 152 forms a threaded recess such that when the two parts 152 are folded together, the recesses will form a threaded bore for receiving a bolt. The procedure for fixation of the shower door is shown with respect to Figs. 7h-j. The upper sleeve 150 is initially arranged in a semi opened state in the recess of the wall profile 20. Hence, the bore is enlarged whereby the shower door is allowed to be aligned with the fixation device 100'" in such manner that the associated bolt is inserted into the bore. In Fig. 7i both the upper and the lower sleeve 150 are arranged in their respective recess of the wall profile, whereby the shower door is positioned correctly such that the bolts are inserted into the bores. Following this, as is shown in Fig. 7j, the shower door is lowered whereby the bolts will press the fixation devices downwards, forcing the sleeves 150 to close. The threads of the bolts will thus engage with the threads of the now closed bores, such that the shower door may be tightened and adjusted relative the shower door wall profile.

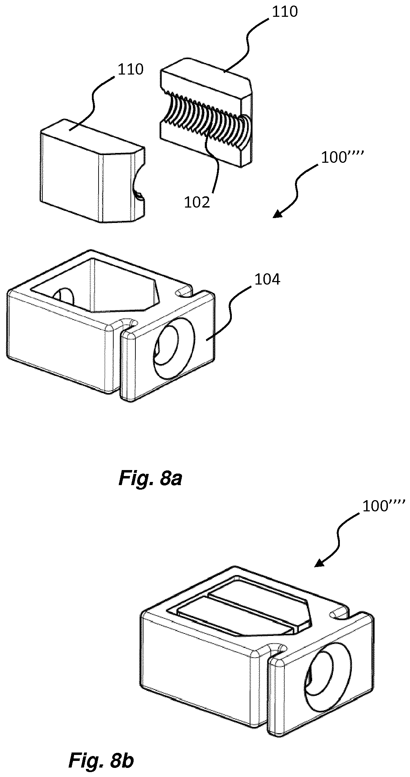

Figs. 8a-f show a further embodiment of a fixation device 100"". The fixation device 100"" is a simplified variant of the fixation device 100' shown in Figs. 5a-c. A rectangular frame or body 104 encloses two moveable structures 110. Each moveable structure 110 has a curved recess, whereby the two curved recesses form a threaded bore 102 for receiving a bolt of a shower door 30. The front end of the rectangular body 104, i.e. the end facing the bolt 32, is provided with a tilted surface such that the width of the front end is decreasing towards the bolt 32. Further to this the front ends of the moveable structures 110 are provided with corresponding surfaces, being tilted such that the front ends are tapered. This is shown in Figs. 8a-b.

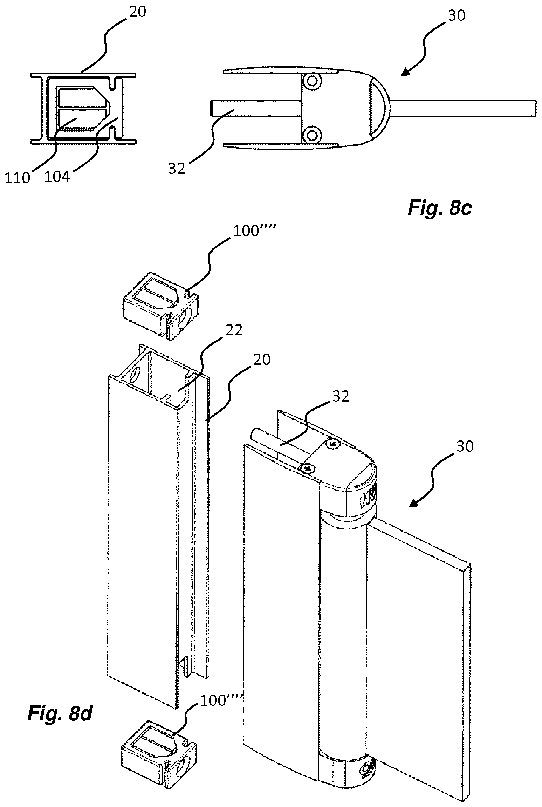

In Figs. 8c and 8d the wall profile 20 is shown, wherein the upper end is provided with a structure 22 for guiding the fixation device 100"" in the correct position. During pre-fixation the bolt 32 of the shower door 30 is aligned with the bore 102 of the fixation device 100"". As the fixation device 100"" is in its idle position the diameter of the bore 102 formed between the two moveable structures 110 is slightly less than the diameter of the bolt 32. For pre-fixation the shower door 30 is pushed towards the profile 20 such that the bolt 32 is pushed against the bore 102. The moveable members 110 will thus be urged to move in the direction of the pushing force, allowing them to be separated due to the provision of the tapered surfaces. Hence the bolt 32 may be fully inserted whereby pre-fixation is achieved. By pulling the shower door outwards, and tightening of the bolt 32, a secure fixation is achieved.

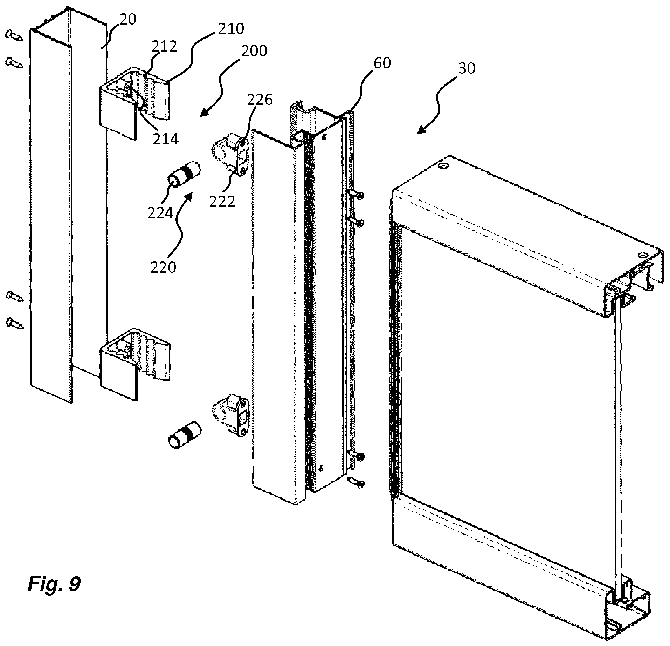

A further embodiment of a fixation device 200 is shown in Fig. 9. The fixation device 200 comprises a support structure 210, attached to the wall profile 20, and an engagement device 220 attached to the support 60 of a shower panel 30. In some embodiments, the support 60 is a hinge support for a shower door.

The support structure 210 has an open end being accessible for the engagement device 220. The open end has a specific width which decreases in the direction towards the wall. At least one groove 212 is provided on each lateral sides of the support structure 210.

The engagement device 220 comprises a support 222, being attached to the support 60, and a double ball spring 224 attached to the support 222. The double ball spring 224 has a cylindrical body enclosing a spring and two balls on opposite sides of the spring, such that the spring urges the balls away from each other.

Pre-fixation is achieved by aligning the double ball spring 224 with the support structure 210, and pushing the shower panel or door 30 towards the profile 20. As the double ball spring 224 moves into the support structure 210, the balls will be pressed together due to the decreased width of the support structure 210. Once the double ball spring reaches the grooves 212, the balls will be allowed to move outwards thus snapping into the respective groove. Hence, pre-fixation is accomplished.

One or more threaded bores 214 may be provided in the support structure 210 for screwing said support structure 210 to the wall profile 20. Accordingly, one or more through holes 226 may be provided in the engagement device 220 for screwing said engagement device 220 to said support 60. Bolts may further be provided for tightening the position of the shower panel or door 30 relative the wall profile 20. In such embodiment, the support 60 may have through holes for receiving the bolts, while the wall profile 20 may have threaded bores for engaging with the bolts.

As is shown in Figs. 9, the support structure 210 may be provided with several grooves 214 for allowing the double ball spring 224 to snap further into the support structure 210.

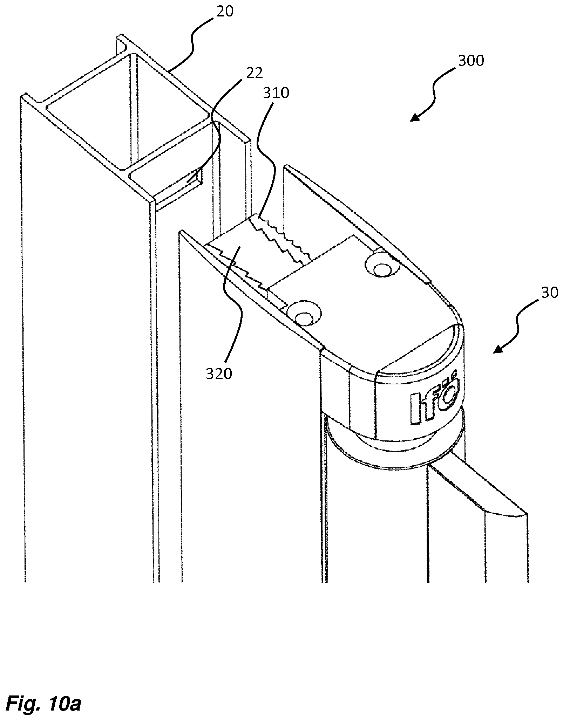

A yet further embodiment of a fixation device 300 is shown in Figs. 10a-d. The fixation device 300 is provided for securing a shower door or panel 30 to a wall profile 20. The fixation device 300 comprises a frame 310 and a sleeve 320 being inserted into said frame. A central portion 322 of the sleeve 320 forms a threaded bore for receiving a bolt 330, and the lateral ends 324 of the sleeve 320 comprises one or more protrusions 325 extending outwards, i.e. away from the central portion 322. The frame 310 has one or more corresponding recesses 312 provided at its inner surface, such that the protrusion(s) 325 of the sleeve 320 may engage with the recess(es) 312 of the frame 310. When the sleeve 320 is displaced relative the frame 310 the protrusion(s) 325 will press the frame 310 outwards, such that the lateral dimensions of the frame 310 increases. Upon this change in shape of the frame 310, the frame 310 will be clamped against the wall profile 20.

As can be seen in Fig. 10a the wall profile 20 has a slot 22 for receiving the fixation device 300, i.e. the frame 310 and the sleeve 320. Mounting of the shower panel, or door 30, to the wall profile 20 will now be described.

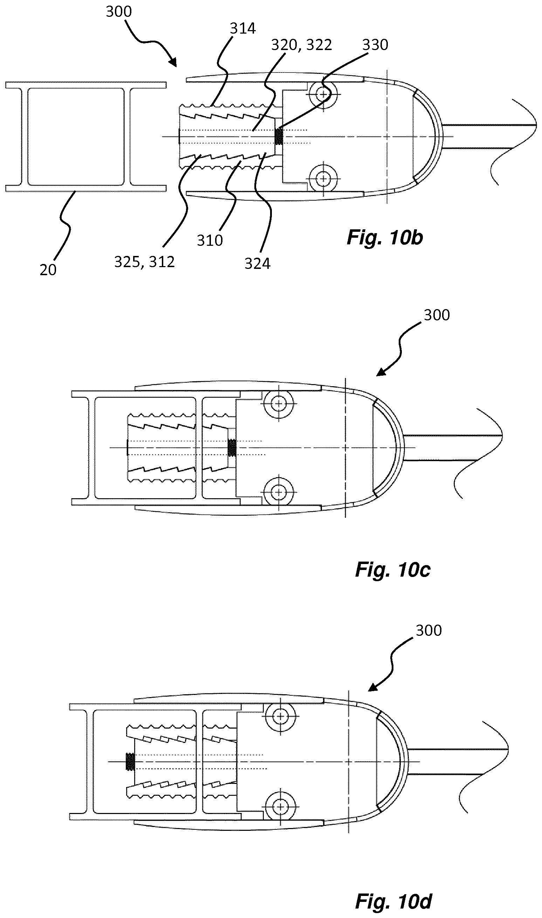

Starting in Fig. 10b, the fixation device 300 is premounted to the bolt 330 of the shower door, or panel 30. The position of the frame 310 relative the sleeve 320 is set such that the sleeve 320 fits with the frame 310 by means of the protrusion/recess interface. The fixation device 300 is thereafter inserted into the slot 22 of the wall profile 20, as can be seen in Fig. 10c. The outer surface of the frame 310 is provided with protrusions 314 which will provide a slight snap-locking of the frame 310 relative the wall profile 20.

In Fig. 10d, pre-fixation is achieved by accessing the bolt 330, and screwing the bolt 330 such that the sleeve 320 will move away from the wall. As the frame 310 is prevented from moving relative the wall profile 20, the sleeve 310 will be forced to move inside the frame 320 thus forcing the frame 310 to expand laterally due to the provision of the tilted surfaces. Upon this, a clamping fixation of the frame, and hence the sleeve 320, to the wall profile 20 is achieved.

The protrusion/recess interface between the frame 310 and the sleeve 320 may be varied. For example, the protrusion/recess interface may be provided by means of one or more tilted surfaces as is shown in Figs. 10a-d.

In the description above various embodiments of a fixation device 100, 200, 300 have been described. Common for all embodiments, the fixation device 100, 200, 300 allows for a quick pre-fixation of a shower door 30, or shower panel 30 relative a wall profile 20, as well as a secure fixation thereafter.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. A fixation device (100) for a shower door system (10), comprising a frame (104) and at least two moveable structures (110) being arranged within said frame (104), wherein the interface between the at least two moveable structures (110) forms a threaded bore (102) for receiving a bolt (32), wherein the frame (104) comprises an aperture being aligned with the threaded bore (102), and wherein the diameter of the bore (102) is determined by the position of the at least two moveable structures (110), wherein the at least two moveable structures (110) are moveable in a first direction towards and away from said aperture of said frame (104), as well as in a second direction towards and away from each other for decreasing and increasing the distance, and hence increasing or decreasing the friction between the threaded bore (102) and the bolt (32) and increasing or decreasing the diameter of the bore (102).

2. The fixation device according to claim 1, wherein the at least two moveable structures (110) are guided by said frame (104) such that moving the at least two moveable structures (110) towards the aperture of the frame (104) will cause a simultaneous movement towards each other.

3. The fixation device according to claim 2, further comprising at least one leg (112) connecting a moveable structure (110) with said frame (104).

4. The fixation device according to claim 2, wherein said frame comprises at least one tilted surface, and wherein said moveable structure (110) comprises a corresponding tilted surface.

5. The fixation device according to any one of the preceding claims, further comprising means (114, 120) for locking the position of at least one of said moveable structures (110).

6. The fixation device according to claim 5, wherein said locking means (114, 120) comprises at least one groove (114) in said moveable structure (110), and a wing (120) being hingedly attached to the inner side of said frame (104), such that a free end of said wing (120) may snap into said at least one groove (114).

7. The fixation device according to claim 6, wherein said wing (120) is detachable from said frame (104).

8. The fixation device according to claim 6, wherein said wing (120) is formed integrally with said frame (104).

9. The fixation device according to any of claims 1 -4, wherein said frame (104) comprises locking means (130) for securing the position of the moveable structures (110).

10. The fixation device according to claim 9, wherein the locking means (130) comprises an aperture (132) for receiving a front end of the moveable structures (110).

11. A shower door system (10), comprising a wall profile (20), and a shower door (30) having a door leaf (40), a hinge (50) and a hinge support (60), wherein said shower door system (10) further comprises at least one fixation device (100, 200) according to any one of the preceding claims.

12. A shower panel system (10), comprising a wall profile (20), and a shower panel (30) having a support (60) for attaching said shower panel (30) to said wall profile (20), wherein said shower door system (10) further comprises at least one fixation device (100, 200) according to any one of claims 1 to 10.

## Patentansprüche

1. Fixiervorrichtung (100) für ein Duschtürsystem (10), umfassend einen Rahmen (104) und mindestens zwei bewegliche Konstruktionen (110), die innerhalb des Rahmens (104) angeordnet sind, wobei die Verbindung zwischen den mindestens zwei beweglichen Konstruktionen (110) durch eine Gewindebohrung (102) zur Aufnahme einer Schraube (32) gebildet wird, wobei der Rahmen (104) eine Öffnung aufweist, die nach der Gewindebohrung (102) ausgerichtet ist, und wobei
der Durchmesser der Bohrung (102) durch die Position der mindestens zwei beweglichen Konstruktionen (110) bestimmt wird, wobei die mindestens zwei beweglichen Konstruktionen (110) in eine erste Richtung zur Öffnung des Rahmens (104) hin und davon weg beweglich sind, sowie in einer zweiten Richtung aufeinander zu und voneinander weg zwecks Verringerung bzw. Vergrößerung des Abstands, und damit zur Vergrößerung bzw. Verkleinerung der Reibung zwischen der Gewindebohrung (102) und der Schraube (32) sowie zur Vergrößerung oder Verkleinerung des Durchmessers der Bohrung (102).

2. Fixiervorrichtung nach Anspruch 1, wobei die mindestens zwei beweglichen Konstruktionen (110) von dem Rahmen (104) so geführt werden, dass die Bewegung der mindestens zwei beweglichen Konstruktionen (110) zur Öffnung des Rahmens (104) hin gleichzeitig die Bewegung zueinander bewirkt.

3. Fixiervorrichtung nach Anspruch 2, die ferner mindestens einen Schenkel (112) umfasst, der eine bewegliche Konstruktion (110) mit dem Rahmen verbindet (104).

4. Fixiervorrichtung nach Anspruch 2, wobei der Rahmen mindestens eine geneigte Fläche aufweist, und wobei die bewegliche Konstruktion (110) eine entsprechende geneigte Fläche aufweist.

5. Fixiervorrichtung nach einem der vorangehenden Ansprüche, die ferner mit Mitteln (114, 120) zur Arretierung der Position von mindestens einer der beweglichen Konstruktionen (110) versehen ist.

6. Fixiervorrichtung nach Anspruch 5, wobei die Arretiermittel (114, 120) mindestens eine Nut (114) in der beweglichen Konstruktion (110), und einen Flügel (120) umfassen, der über ein Scharnier mit der Innenseite des Rahmens (104) so verbunden ist, dass ein freies Ende des Flügels (120) in mindestens eine Nut (114) einschnappen kann.

7. Fixiervorrichtung nach Anspruch 6, wobei der Flügel (120) von dem Rahmen (104) abnehmbar ist.

8. Fixiervorrichtung nach Anspruch 6, wobei der Flügel (120) zusammen mit dem Rahmen (104) einstückig ausgebildet ist.

9. Fixiervorrichtung nach einem der Ansprüche 1-4, wobei der Rahmen (104) Arretiermittel (130) zur Sicherung der Position der beweglichen Konstruktionen (110) umfasst.

10. Fixiervorrichtung nach Anspruch 9, wobei das Arretiermittel (130) eine Öffnung (132) zur Aufnahme des vorderen Endes der beweglichen Konstruktion (110) aufweist.

11. Duschtürsystem (10), umfassend ein Wandprofil (20) und eine Duschtür (30), die aus einem Türblatt (40), einem Scharnier (50) und einer Scharnierhalterung (60) besteht, wobei das Duschtürsystem (10) ferner mindestens eine Fixiervorrichtung (100, 200) nach einem der vorangehenden Ansprüche umfasst.

12. Duschpaneelsystem (10), umfassend ein Wandprofil (20) und ein Duschpaneel (30), das mit einer Halterung (60) zur Befestigung des Duschpaneels (30) an dem Wandprofil (20) versehen ist, wobei das Duschtürsystem (10) ferner mindestens eine Fixiervorrichtung (100, 200) nach einem der Ansprüche 1 bis 10 umfasst.

## Revendications

1. Dispositif de fixation (100) pour un système de porte de douche (10), comprenant un bâti (104) et au moins deux structures mobiles (110) qui sont agencées à l'intérieur dudit bâti (104), dans lequel l'interface entre au moins deux structures mobiles (110) forme un alésage fileté (102) pour recevoir un boulon (32), dans lequel :
le bâti (104) comprend une ouverture qui est alignée avec l'alésage fileté (102) et dans lequel le diamètre de l'alésage (102) est déterminé par la position des au moins deux structures mobiles (110), dans lequel les au moins deux structures mobiles (110) sont mobiles dans une première direction vers et à distance de ladite ouverture dudit bâti (104), ainsi que dans une seconde direction vers et à distance l'une de l'autre pour diminuer et augmenter la distance, et par conséquent augmenter ou diminuer la friction entre l'alésage fileté (102) et le boulon (32) et augmenter ou diminuer le diamètre de l'alésage (102).

2. Dispositif de fixation selon la revendication 1, dans lequel les au moins deux structures mobiles (110) sont guidées par ledit bâti (104) de sorte que le déplacement des au moins deux structures mobiles (110) vers l'ouverture du bâti (104) provoque un mouvement simultané l'une vers l'autre.

3. Dispositif de fixation selon la revendication 2, comprenant en outre au moins une patte (112) raccordant une structure mobile (110) avec ledit bâti (104).

4. Dispositif de fixation selon la revendication 2, dans lequel ledit bâti comprend au moins une surface inclinée, et dans lequel ladite structure mobile (110) comprend une surface inclinée correspondante.

5. Dispositif de fixation selon l'une quelconque des revendications précédentes, comprenant en outre un moyen (114, 120) pour bloquer la position d'au moins l'une desdites structures mobiles (110).

6. Dispositif de fixation selon la revendication 5, dans lequel ledit moyen de blocage (114, 120) comprend au moins une rainure (114) dans ladite structure mobile (110), et une aile (120) qui est fixée, de manière articulée, sur le côté interne dudit bâti (104), de sorte qu'une extrémité libre de ladite aile (120) peut s'encliqueter dans ladite au moins une rainure (114).

7. Dispositif de fixation selon la revendication 6, dans lequel ladite aile (120) est détachable dudit bâti (104).

8. Dispositif de fixation selon la revendication 6, dans lequel ladite aile (120) est formée de manière solidaire avec ledit bâti (104).

9. Dispositif de fixation selon l'une quelconque des revendications 1 à 4, dans lequel ledit bâti (104) comprend un moyen de blocage (130) pour fixer la position des structures mobiles (110).

10. Dispositif de fixation selon la revendication 9, dans lequel le moyen de blocage (130) comprend une ouverture (132) pour recevoir une extrémité avant des structures mobiles (110).

11. Système de porte de douche (10) comprenant un profilé de paroi (20) et une porte de douche (30) ayant un vantail de porte (40), une charnière (50) et un support de charnière (60), dans lequel ledit système de porte de douche (10) comprend en outre au moins un dispositif de fixation (100, 200) selon l'une quelconque des revendications précédentes.

12. Système de panneau de douche (10) comprenant un profilé de paroi (20) et un panneau de douche (30) ayant une support (60) pour fixer ledit panneau de douche (30) audit profilé de paroi (20), dans lequel ledit système de porte de douche (10) comprend en outre au moins un dispositif de fixation (100, 200) selon l'une quelconque des revendications 1 à 10.
